# EUROPÄISCHE PATENTANMELDUNG

(11) **EP 3 002 719 A1**
(43) Veröffentlichungstag der Anmeldung: **06.04.2016**
(21) Anmeldenummer: 14187084.0
(22) Anmeldetag: 30.09.2014
(51) Int. Cl.: G06Q 10/08

(54) **Ausschluss von Überreichweiten bei RFID-Gate-Anwendungen**

(71) Anmelder: Siemens Aktiengesellschaft, 80333 München (DE)
(72) Erfinder: Weinländer, Markus, 91230 Happurg (DE)

(57) **Zusammenfassung**

Die Erfindung betrifft ein Verfahren und eine Anordnung zur automatischen Erfassung von Warendurchgängen durch ein Erfassungs-Tor (1), wobei die Waren (5) mit drahtlos erfassbaren Warenetiketten, insbesondere RFID-Transpondern, versehen sind, wobei die Waren von einer ersten Fläche unter Verwendung des Erfassungs-Tores (1) zu einer zweiten Fläche verbracht werden, oder umgekehrt, und wobei im Erfassungs-Tor (1) mittels zumindest einer Antenne (2) eines RFID-Lesegerätes die hindurchgeführten Warenetiketten der Waren (5) und die jeweilige Transportrichtung registriert und zur Führung oder Berichtigung eines Warenverzeichnisses verwendet werden. Dabei wird mittels zumindest einer weiteren Antenne (7) des RFID-Lesegerätes oder eines weiteren RFID-Lesegerätes zeitlich vor und / oder nach der Erfassung des Warendurchganges durch das Erfassungs-Tor (1) zumindest eine Inventarliste der Waren der ersten und / oder der zweiten Fläche erfasst, wobei ein mittels des Erfassungs-Tores (1) erfasster Warendurchgang und die dabei erfasste Transportrichtung anhand der zumindest einen Inventarliste plausibilisiert wird, und wobei nur in einem plausiblen Fall das Warenverzeichnis geändert wird. Dadurch können Fehler beim Erfassen des Warendurchganges, die durch Überreichweiten der nicht am Warendurchgang tatsächlich beteiligter Warenetiketten begründet sind, detektiert und berücksichtigt werden.

## Beschreibung

Die Erfindung betrifft ein Verfahren und eine Anordnung zur automatischen Erfassung von Warendurchgängen durch ein Erfassungs-Tor unter Verwendung von drahtlos erfassbaren Warenetiketten (RFID-Transponder).

In der Logistik werden sogenannte RFID-Gates (auch als Erfassungs-Tore, Ladetore, Portale oder kurz "Gates" bezeichnet) eingesetzt, um Wareneingangs- und Warenausgangsbuchungen in einem Warenverzeichnis automatisch vorzunehmen. Dazu werden RFID-Antennen an den Ladetoren sowie drahtlos erfassbare Warenetiketten (kurz: RFID-Transponder) an den Gütern oder Paletten angebracht. Das Warenverzeichnis wird dadurch geführt, dass für Buchungen die Ware, vorzugsweise in kompletten Paletten, durch das Ladetor gefahren und dabei registriert wird; je nach Richtung, unter der die Ware das Ladetor durchfährt, wird die dabei erfasste Ware dem Warenverzeichnis hinzugefügt oder aus diesem entfernt. Beispielsweise kann Ware, die in den Versand geht, mittels des Ladetors ausgebucht werden, während Wareneingang (Lieferungen) damit zugebucht wird.

Da aber in räumlicher Nähe zu den Gates andere Paletten mit RFID-Transpondern abgestellt werden, kann es sein, dass diese Transponder infolge sog. Überreichweiten erfasst und versehentlich mit gebucht werden. Die RFID-Lesung erfolgt dabei meist durch eine Triggerung, z.B. durch Bewegungsmelder oder Lichtschranken, um die Emittierung von Funkwellen und damit die Beeinflussung anderer Systeme zu reduzieren.

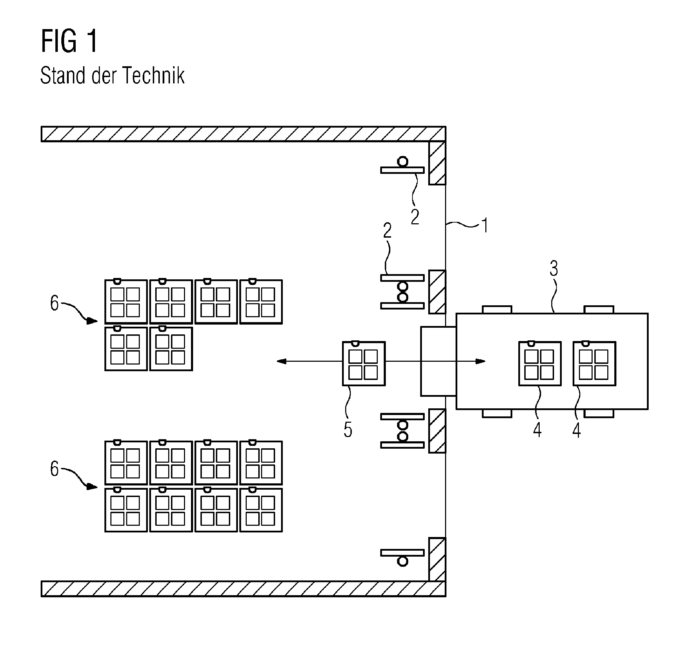

Die Figur 1 zeigt das prinzipielle Layout einer solchen Installation gemäß dem Stand der Technik. Im Zugang eines Lagers, beispielsweise einer Halle, sind ein oder mehrere Ladetore (1) vorhanden, durch die Lkw (3) be- oder entladen werden, d.h., dass die zum Be- und Entladen von Lkw oder dgl. verwendeten Flurförderzeuge diese Ladetore durchfahren.

In der Halle (im Weiteren auch "erste Fläche" genannt; in den Figuren links angeordnet) gibt es Stellflächen für palettierte Güter (6). Weitere Paletten können bereits im Lkw (im Weiteren auch "zweite Fläche" genannt; in den Figuren rechts angeordnet) eingeladen sein (4) oder von diesem angeliefert werden. Die Paletten werden dann einzeln oder gestapelt (5) durch die Ladetore aus dem Lkw zur Stellfläche gefahren (Wareneingang) oder von dort geholt und in den Lkw geschoben (Warenausgang). An den Ladetoren sind RFID-Antennen (2) von RFID-Lesegeräten angebracht, die eine Verbuchung der erfassten Waren in einem Warenverzeichnis beim Wareneingang oder Warenausgang durchführen.

Da die Flurförderzeuge, der Lkw (Kühlkasten, Container), oder ggfs. auch die Hallenwände meist metallische Oberflächen aufweisen, gibt es Reflektionen der Funkwellen, die dazu führen können, dass bei einer Wareneingangs- oder -ausgangsbuchung (5) auch eine Palette aus der Stellfläche (6) erfasst und fälschlicherweise gebucht wird. Solche Fehllesungen ("false positive reads") werden wegen ihrer häufigen Ursache oft auch als "Überreichweiten" bezeichnet.

Bislang wurden folgende Lösungswege realisiert:
- Abschirmung durch Absorptionsmaterial - das ist baulich jedoch nur in Ausnahmefällen realisierbar.
- Ausschluss durch RFID-Parameteroptimierung - hier wird die Konfiguration eines Readers oder die Auswahl von Antennen und Transpondern so optimiert, dass die Überreichweiten ausgeschlossen werden können (z.B. Transponder mit geringerer Sensitivität, Antennen mit unterschiedlicher Polarisation, Reduzierung der Sendeleistung). Praktisch zeigte sich, dass dieses Verfahren nicht alle Fälle zuverlässig ausschließen kann.
- Ausschluss durch Software-Filter - hier werden Überreichweiten durch statistische Methoden ausgefiltert, z.B. Lesehäufigkeit. Auch dieses Verfahren ist in der Praxis nicht in jedem Fall zuverlässig.

Es ist also eine Aufgabe der vorliegenden Erfindung, bei der automatischen Erfassung von Warendurchgängen durch ein Erfassungs-Tor die durch Überreichweiten bedingten Fehlerfassungen zu vermeiden.

Die Lösung der Aufgabe ist in den Patentansprüchen angegeben. Die abhängigen Patentansprüche geben dabei vorteilhafte Ausgestaltungen an, die beliebig miteinander kombiniert werden können. Ausgestaltungen des Verfahrens gelten sinngemäß auch für die Anordnung, und umgekehrt.

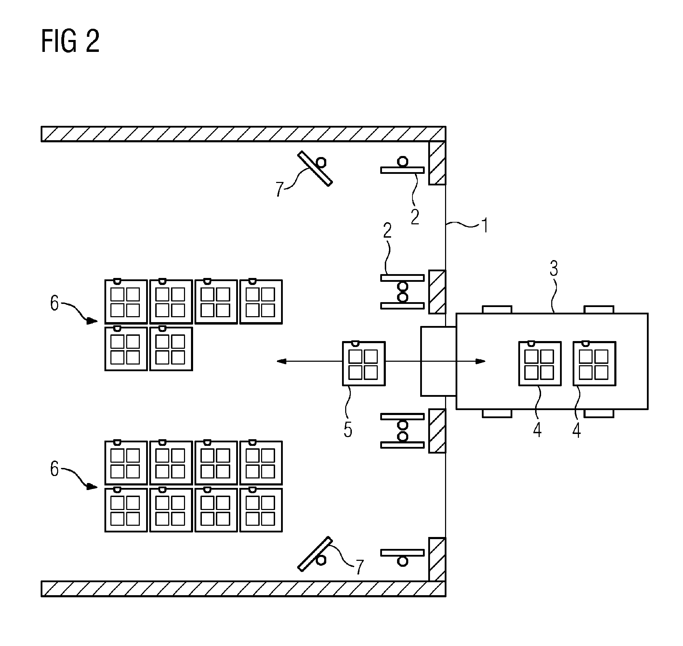

Anhand der Figur 2 wird im Folgenden erläutert, wie die Erfindung das Problem löst.

Zur Lösung des Problems wird in der Halle eine geringe Anzahl weiterer Antennen (7) so aufgestellt, dass die Paletten auf der Stellfläche von diesen Antennen bewusst erfasst werden. Diese Antennen sind in regelmäßigen Abständen aktiv, aber nicht dann, wenn eine Gate-Durchfahrt erfolgt. Aus den Leseereignissen dieser Antennen (7) wird eine eigene, zusätzliche Liste von Transponder-IDs erzeugt ("Inventarliste").

Für den Ausschluss von Falschbuchungen wird die Inventarliste wie folgend mit den an den Gates erfassten Transpondern abgeglichen:
Wird bei einem Wareneingang ein Transponder erfasst, der bereits auf der Inventarliste geführt wird, so ist die Wareneingangsbuchung für das Warenverzeichnis ungültig.
Wird nach einem erfassten Warenausgang ein Transponder auf die Inventarliste gesetzt, so ist die Warenausgangsbuchung ungültig und muss im Warenverzeichnis storniert werden.

Alternativ oder zusätzlich können auch außerhalb der Lagerfläche / Halle zusätzliche Antennen vorgesehen werden, um den mittels des Erfassungs-Tores erfassten Warendurchgang gegen eine dortige Inventarisierung zu prüfen.

Mit dem geschilderten Verfahren bzw. der Anordnung kann ein Warenverzeichnis der Halle, Fläche oder dgl. zuverlässig geführt werden, ohne dass Überreichweiten zu Fehlbuchungen führen. Zusätzliche Antennen sind nur innerhalb der Halle erforderlich, können vorteilhaft aber auch durch solche außerhalb der Halle / Fläche ergänzt werden, was die Absicherung weiter verbessert. Die zusätzlichen Antennen erzeugen eine Inventarliste, die die lokal lesbaren Transponder umfasst. Dabei ist wichtig, dass keine der außerhalb befindlichen Transponder von dieser Zusatzantenne gelesen werden können. Idealerweise reicht das Erfassungsgebiet dieser Antennen bis an das Ladetor heran, aber keinesfalls jenseits des Ladetores. Andererseits müssen die zusätzlichen Antennen nicht die komplette Fläche, Halle etc. abdecken, wenn man davon ausgeht, dass die Inventarliste kurz vor der Durchfahrt durch das Ladetor aktualisiert wird und sich die Waren nur mit begrenzter Geschwindigkeit verfahren lassen.

Erfindungsgemäß ist nur eine geringe Anzahl zusätzlicher Komponenten erforderlich, was in der Regel baulich einfach realisierbar ist. Das Verfahren arbeitet prozess-sicher und ist unempfindlich gegenüber ungünstigen und wechselnden Umgebungsbedingungen. Die Absicherung erfolgt vorzugsweise dadurch, dass eine Warenetikette (Transponder), die von einer Zusatzantenne erfasst wird, obwohl dies dem vom Ladetor erfassten Vorgang logisch widerspricht, zur Erkennung eines Fehlers führt, während eine von den Zusatzantennen nicht erfasste Etikette unerheblich ist. Dies bedeutet, dass die Zusatzantennen keine absolute Erfassungssicherheit aufweisen müssen und vor allem auch nicht die komplette Halle ("erste Fläche") abdecken müssen. Zudem ist der erforderliche Algorithmus einfach zu implementieren.

## Patentansprüche

1. Verfahren zur automatischen Erfassung von Warendurchgängen durch ein Erfassungs-Tor (1), wobei die Waren (5) mit drahtlos erfassbaren Warenetiketten, insbesondere RFID-Transpondern, versehen sind,
wobei die Waren von einer ersten Fläche unter Verwendung des Erfassungs-Tores (1) zu einer zweiten Fläche verbracht werden, oder umgekehrt, und
wobei im Erfassungs-Tor (1) mittels zumindest einer Antenne (2) eines RFID-Lesegerätes die hindurchgeführten Warenetiketten der hindurchgeführten Waren (5) und die jeweilige Transportrichtung registriert und zur Führung oder Berichtigung eines Warenverzeichnisses verwendet werden,
**dadurch gekennzeichnet,**
**dass** mittels zumindest einer weiteren Antenne (7) des RFID-Lesegerätes oder eines weiteren RFID-Lesegerätes zeitlich vor und / oder nach der Erfassung des Warendurchganges durch das Erfassungs-Tor (1) zumindest eine Inventarliste der Waren (4, 6) der ersten und / oder der zweiten Fläche erfasst wird, und dass ein mittels des Erfassungs-Tores (1) erfasster Warendurchgang und die dabei erfasste Transportrichtung anhand der zumindest einen Inventarliste plausibilisiert wird, und wobei nur in einem plausiblen Fall das Warenverzeichnis geändert wird.

2. Verfahren nach Patentanspruch 1,
**dadurch gekennzeichnet,**
**dass** nur in den Fällen ein Wareneingang für das Warenverzeichnis verbucht wird, wenn die mittels des Erfassungs-Tores (1) als eingehend erfasste Warenetikette zeitlich vor dem Erfassungsvorgang noch nicht der Inventarliste dieser ersten Fläche zugeordnet war.

3. Verfahren nach Patentanspruch 1 oder 2,
**dadurch gekennzeichnet,**
**dass** nur in den Fällen ein Warenausgang für das Warenverzeichnis verbucht wird, wenn die mittels des Erfassungs-Tores (1) als ausgehend erfasste Warenetikette zeitlich nach dem Erfassungsvorgang nicht der Inventarliste der ersten Fläche zugeordnet ist.

4. Verfahren nach einem der vorhergehenden Patentansprüche,
**dadurch gekennzeichnet,**
**dass** nur in den Fällen ein Wareneingang für das Warenverzeichnis verbucht wird, wenn die mittels des Erfassungs-Tores (1) als eingehend erfasste Warenetikette zeitlich nach dem Erfassungsvorgang der Inventarliste der zweiten Fläche nicht zugeordnet ist.

5. Verfahren nach einem der vorhergehenden Patentansprüche,
**dadurch gekennzeichnet,**
**dass** nur in den Fällen ein Warenausgang für das Warenverzeichnis verbucht wird, wenn die mittels des Erfassungs-Tores (1) als ausgehend erfasste Warenetikette zeitlich nach dem Erfassungsvorgang der Inventarliste der zweiten Fläche zugeordnet ist.

6. Verfahren nach einem der vorhergehenden Patentansprüche,
**dadurch gekennzeichnet,**
**dass** mit der zumindest einen weiteren Antenne (7) ein Teilbereich der ersten und / oder der zweiten Fläche erfasst wird, wobei die weitere Antenne (7) derart ausgerichtet und angeordnet wird, dass damit Warenetiketten der jeweils anderen Fläche regelmäßig nicht erfassbar sind.

7. Anordnung zur automatischen Erfassung von Warendurchgängen durch ein Erfassungs-Tor (1), wobei die Waren (5) mit drahtlos erfassbaren Warenetiketten, insbesondere RFID-Transponder, versehen sind,
wobei die Waren von einer ersten Fläche unter Verwendung des Erfassungs-Tores (1) zu einer zweiten Fläche verbracht werden können, oder umgekehrt, und
wobei die Anordnung derart ausgestaltet ist, dass im Erfassungs-Tor (1) mittels zumindest einer Antenne (2) eines RFID-Lesegerätes die hindurchgeführten Warenetiketten der Waren (5) und die jeweilige Transportrichtung registriert und zur Führung oder Berichtigung eines Warenverzeichnisses verwendet werden,
**dadurch gekennzeichnet,**
**dass** zumindest eine weitere Antenne (7) vorgesehen ist, wobei vorgesehen ist, dass mittels der zumindest einer weiteren Antenne (7) des RFID-Lesegerätes oder eines weiteren RFID-Lesegerätes zeitlich vor und / oder nach der Erfassung des Warendurchganges durch das Erfassungs-Tor (1) zumindest eine Inventarliste der Waren der ersten und / oder der zweiten Fläche erfasst wird, und
**dass** vorgesehen ist, einen mittels des Erfassungs-Tores (1) erfassten Warendurchgang und die dabei erfasste Transportrichtung anhand der zumindest einen Inventarliste zu plausibilisieren, wobei nur in einem plausiblen Fall das Warenverzeichnis geändert wird.

8. Anordnung nach Patentanspruch 7,
**dadurch gekennzeichnet,**
**dass** die zumindest eine weitere Antenne (7) derart ausgerichtet und angeordnet ist, dass damit Warenetiketten eines Teilbereiches der ersten und / oder der zweiten Fläche erfassbar sind, aber die Warenetiketten der jeweils anderen Fläche regelmäßig nicht erfassbar sind.
